Europäisches Patentamt

European Patent Office

Office européen des brevets

(19)

(11) Numéro de publication: **0 152 335**
**B1**

(12) **FASCICULE DE BREVET EUROPEEN**

(45) Date de publication du fascicule du brevet:
**20.04.88**

(51) Int. Cl.⁴: **B 01 J 4/00,** B 01 J 8/12,
C 10 G 35/12

(21) Numéro de dépôt: **85400165.8**

(22) Date de dépôt: **01.02.85**

(54) **Procédé et appareil pour soutirer des particules catalytiques hors d'une zone de réaction.**

(30) Priorité: **07.02.84 FR 8402035**

(43) Date de publication de la demande:
**21.08.85 Bulletin 85/34**

(45) Mention de la délivrance du brevet:
**20.04.88 Bulletin 88/16**

(84) Etats contractants désignés:
**BE DE GB IT NL**

(56) Documents cités:
**EP - A - 0 099 800**
**AU - B - 522 789**
**DE - A - 3 244 742**
**FR - A - 2 019 203**
**GB - A - 2 078 537**
**US - A - 2 846 371**
**US - A - 3 935 825**
**US - A - 4 335 661**

(73) Titulaire: **INSTITUT FRANCAIS DU PETROLE, 4, Avenue de Bois-Préau, F-92502 Rueil-Malmaison (FR)**

(72) Inventeur: **Dall, Didier, 44, rue Quivogne, F-69002 Lyon (FR)**
Inventeur: **Euzen, Jean-Paul, 45, Chemin Bachely, F-69570 Dardilly (FR)**
Inventeur: **Patoux, Rémy, 55, rue Francisque Jomard Bat. B, F-69600 Oullins (FR)**
Inventeur: **Renard, Pierre, 8, Allée des Romarins, F-78860 Saint Nom La Breteche (FR)**

ACTORUM AG

## Description

La présente invention concerne un procédé et sa mise en œuvre, ainsi que l'appareil permettant cette mise en œuvre, pour les traitements d'une charge fluide (liquide et/ou gaz) au travers d'un lit catalytique de particules solides.

L'invention est notamment applicable aux traitements catalytiques des coupes pétrolières en présence d'un mélange gazeux riche en hydrogène: hydroconversion, hydrotraitements des coupes lourdes (résidus de distillation sous vide par exemple) ou des bruts lourds non conventionnels.

Lors de tels traitements catalytiques, on constate une désactivation souvent rapide du catalyseur, due à la présence de poisons catalytiques, à la formation de coke, du dépôt de certains métaux ...etc...

Dans le présent procédé, le soutirage du catalyseur hors du réacteur est effectué «progressivement», ce qui signifie que le catalyseur peut être soutiré:

— soit périodiquement dans le temps par fraction du volume catalytique et par exemple avec une fréquence de 1/10 jour à 10 jours; cette technologie permettant de soutirer le catalyseur du fond du réacteur sans perturber le reste du lit catalytique maintenu en activité. On peut créer ainsi éventuellement une stratification de couches de grains de catalyseur: on remplace la fraction soutirée par un volume identique de catalyseur frais au sommet du réacteur ou de la zone de réaction: il s'agit là d'un lit semi-mobile

— soit périodiquement en totalité (lit fixe)

— soit en continu, le soutirage de catalyseur étant alors associé à un remplacement de catalyseur frais en tête de la zone de réaction (lit mobile).

Dans le cadre de l'invention, et du fait même de son principe, la forme et la taille des grains de solide utilisés n'influent pas sur les performances du procédé et du dispositif revendiqué. Ainsi le procédé et l'appareil conviennent également pour le soutirage des particules catalytiques utilisées dans les réactions d'hydrodémétallation, d'hydrodésulfuration, de craquage, d'hydrocraquage, d'hydroréformage, de fabrication d'hydrocarbures aromatiques, d'isomérisations d'hydrocarbures paraffiniques, naphténiques ou aromatiques, les réactions diverses d'hydrogénation, d'hydrotraitement, de déshydrogénation, d'alkylation, de transalkylation, d'hydrodécyclisation, d'hydrodéalkylation, des traitements d'hydroviscoréduction, etc... réacteurs où la charge et/ou les gaz qui y son injectés, cheminent de bas en haut.

Selon les cas, la charge fluide traversant en majeure partie le lit catalytique de bas en haut peut être introduite dans le réacteur ou la zone de réaction par une seule tubulure ou plusieurs, le lit catalytique mobile ou semi-mobile circulant à contre-courant de celle-ci. Les organes de distribution de la charge fluide sont disposés sur un plateau de distribution réalisant la fonction de soutien du lit catalytique dans les périodes de temps où l'on ne soutire pas de catalyseur. Les tubulures d'introduction des fluides vers les organes de distribution sont situées sous ce plateau dans une zone donc totalement exempte de solides.

La circulation à contre-courant de la charge et du catalyseur permet d'obtenir une conversion catalytique poussée puisque le catalyseur frais introduit au sommet du réacteur traite une charge presque convertie (c'est à dire contenant essentiellement des composés dont la transformation est difficile), tandis qu'au fond du réacteur, le catalyseur usé traite une charge fraîche (c'est à dire riche en composés faciles à transformer), ce qui réalise efficacement les premières étapes de la conversion. Il en résulte une utilisation systématique du catalyseur dans le réacteur, un profil thermique du lit catalytique plus régulier que dans une circulation du type co-courant, avec, en particulier, au bas du réacteur une température plus modérée réduisant les risques de cokéfaction du catalyseur.

L'objet de cette invention concerne une technique de soutirage de catalyseur, et d'injection des fluides dans le réacteur sans qu'il soit besoin d'utiliser des grilles de soutien de forme conique ou pyramidale, comme c'est généralement le cas lorsqu'on utilise des lits catalytiques soutirés progressivement.

Ainsi le Brevet Français 2 504 821 présente une technique utilisant ce type d'interne conique ou pyramidal.

Le procédé selon l'invention s'inspire d'une technique consistant à fluidiser uniquement éventuellement les couches inférieures du lit mobile ou semi-mobile ou fixe de façon à pouvoir faire évacuer plus facilement les particules catalytiques, les couches supérieures du lit catalytique pouvant rester sous la forme de lit mobile ou de lit fixe. Le brevet USP n° 3 716 478 enseigne un principe voisin et permet d'obtenir une fluidisation correcte en fond de réacteur en jouant sur la vitesse d'injection de la charge dans le fond du réacteur et en aspirant, généralement au moyen d'une pompe, les particules catalytiques pour les évacuer du réacteur. Cependant dans le procédé de ce brevet américain, les cheminements des particules catalytiques sont irréguliers et difficilement contrôlables et de ce fait ne permettraient pas la régularité d'écoulement qui convient dans la descente progressive de la totalité du lit dans le réacteur; et ces inconvénients sont d'autant plus marqués quand on choisit un réacteur de diamètre important comme c'est de plus en plus le cas dans les opérations de raffinage.

La présente invention répond à un besoin de simplification pour une réalisation appliquée et concerne en particulier les réacteurs de très grands diamètres.

On arrive à ce résultat par le procédé et le dispositif, objets de l'invention et décrits ci-dessous:

Les particules à soutirer, contenues dans le «réacteur» ayant la forme d'un volume de révolution allongé et sensiblement vertical, sont introduites «progressivement» par la partie supérieure de l'enceinte et soutirées «progressivement» dans la partie inférieure après avoir cheminé de haut en bas, tandis que la charge fluide est introduite (au moins en partie) dans la partie inférieure du réacteur; les particules sont soutirées par une ou plusieurs tubulures verticales de diamètre suffisant pour véhiculer le catalyseur hors de l'enceinte. L'extrémité supérieure de(s) tubulure(s) de soutirage est mécaniquement liée au plateau de distribution de la charge fluide.

Le dispositif, selon l'invention, comprend la disposition sur le plateau de distribution d'internes de formes triangulaires ou trapézoïdales dont la position et l'orientation est déterminée pour créer des zones dans lesquelles les vitesses locales des fluides sont supérieures aux vitesses nominales dans le lit proprement dit s'étendant dans la zone supérieure et pour créer parallèlement des courants de solides supprimant ainsi toute zone morte non soutirable en fond de réacteur.

Ce dispositif, selon l'invention, est également caractérisé par le nombre et la position des trous d'injection de gaz créant une perte de charge suffisante au travers du plateau de distribution pour générer un matelas gazeux sous le dit plateau, ainsi que par le nombre, la position et la forme des «plots» ou «buses» de distribution du liquide diffusant le liquide de la zone située en dessous du plateau à la zone supérieure renfermant le lit catalytique.

On notera que le brevet australien 522 789 décrit des ailettes en fond de réacteur (fig. 7) mais dans un contexte très différent de notre appareillage puisque, dans le brevet australien, les plateaux horizontaux supérieur et inférieur tournent et tournent en outre à des vitesses différentes par le jeu de pignons; le plateau inférieur est muni de fentes radiales solidaires du plateau inférieur pour l'évacuation du catalyseur et non d'un tuyau vertical dans notre demande de brevet; il ne peut y avoir de tuyau central d'évacuation de catalyseur dans le brevet australien, puisqu'il y a à cet endroit un arbre tournant entraînant deux plateaux, les ailettes servant donc (comme des raclettes ou des grattoirs) à pousser les particules catalytiques vers les fentes du plateau inférieur.

L'invention est illustrée par diverses figures:

Les figures 1 et 1A montrent un dispositif selon l'invention avec un seul tube de soutirage.

La figure 2 montre en vue de dessus un dispositif selon l'invention avec plusieurs tubes de soutirage.

Les figures 3, 3A, 4, 4A, 4B, 5, 5A, 5B, 6, 6A, 6B et 7 illustrent différents types de plots de distribution.

Les figures 8, 8A, 9 et 9A illustrent différentes dispositions d'internes triangulaires ou trapézoïdaux.

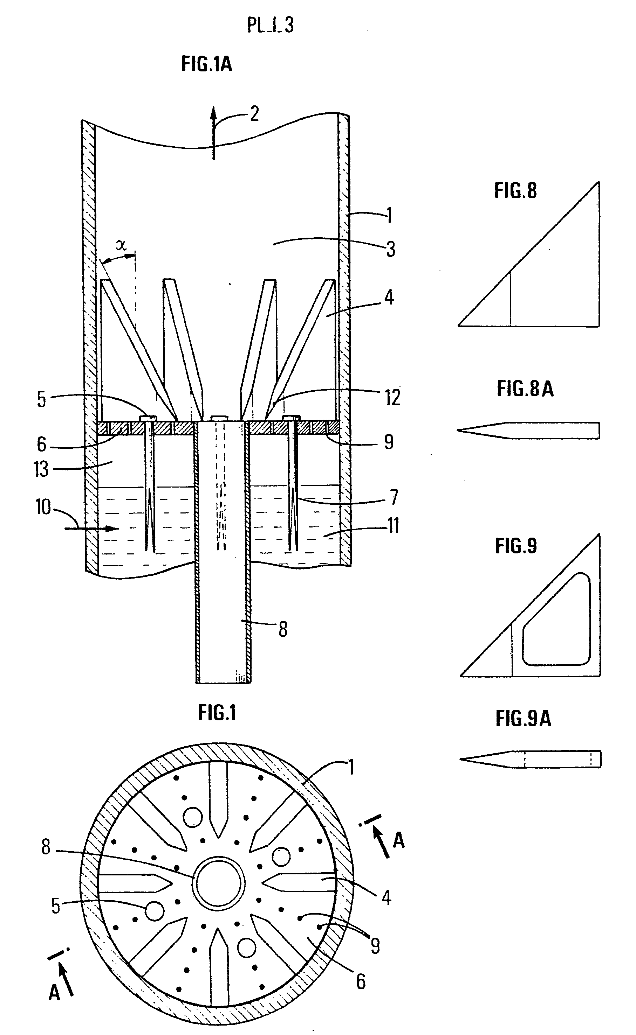

Les figures 1 et 1A (en coupe) représentent schématiquement un premier mode de réalisation d'un dispositif de traitement catalytique à soutirage progressif du catalyseur.

Le réacteur (1) (voir figures 1 ou 1A) comporte à sa partie supérieure des moyens non représentés d'introduction de catalyseur frais (neuf ou régénéré) alimentant le lit catalytique (3). La charge (10) est introduite par le fond du réacteur. Le catalyseur s'écoule par gravité dans le réacteur (à contre courant de la charge circulant dans le sens (2) ) et est évacué par une tubulure (8) à l'extérieur de l'enceinte.

La disposition radiale d'internes (4) ici triangulaires permet d'accélérer les particules dans la zone inférieure, détruisant les talus ou zones mortes susceptibles de se former lors du soutirage. L'angle $\alpha$ caractérisant la pente des internes est égal ou supérieur à la valeur de l'angle ($\alpha$) de friction interne caractéristique du catalyseur.

Les figures 8, 8A, 9 et 9A montrent deux formes possibles correspondant à ces exigences. On peut diminuer progressivement l'épaisseur (12) de l'ailette au voisinage du trou de soutirage (8) pour faciliter l'évacuation du catalyseur. L'ensemble de ces internes est ici monté sur un plateau de distribution (6) muni de trous d'injection de gaz (9) et/ou de plots de distributions de liquide (5) selon la nature de la charge fluide à traiter. Le diamètre du trou de distribution de gaz doit être tel que la perte de charge occasionnée à leur passage soit comprise entre 0,1 et 1,5 kgf/cm$^2$ (9806 et 147.100 Pa) de préférence environ 0,2 kgf/cm$^2$ (19 614 Pa); de plus leur taille est bornée par la taille minimale du catalyseur contenu dans le réacteur (1) de façon à prévenir toute fuite de catalyseur dans la chambre de distribution (11). Les plots de distribution de liquide (5) peuvent présenter différentes formes susceptibles de contribuer au détassement de la zone inter-ailettes.

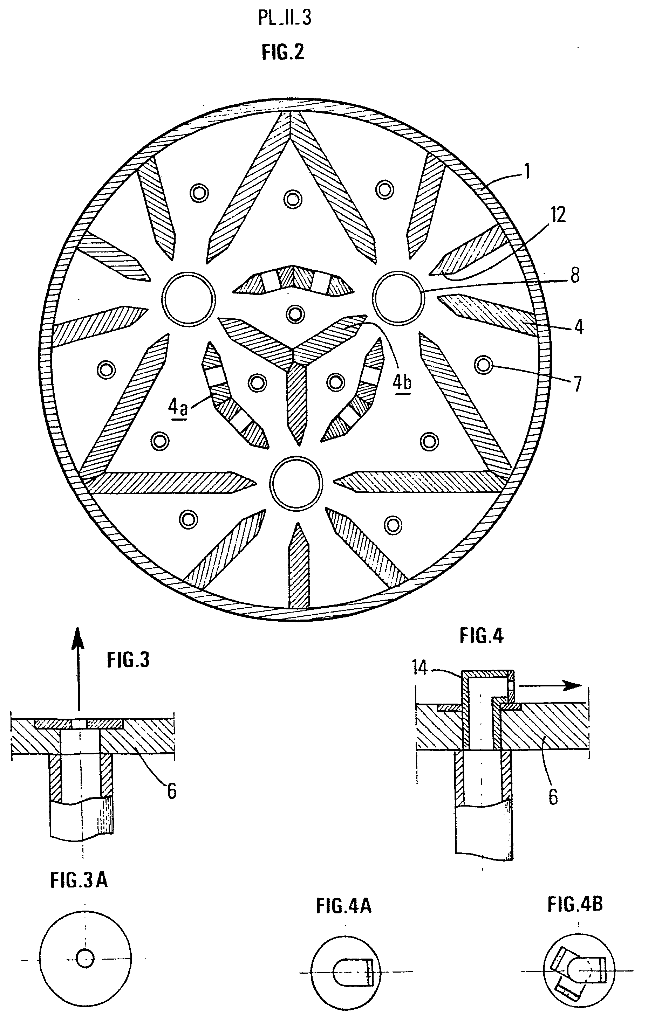

Les figures 3, 3A, 4, 4A, 4B, 5, 5A, 5B, 6, 6A, 6B et 7 présentent différentes formes de plots: chaque plot est muni d'un canal d'alimentation (7) (figure 1A) traversant le matelas gazeux (13) créé sous le plateau de distribution (6) et plongeant dans le «holp-up» ou réserve de liquide du fond de réacteur. Chaque tube d'alimentation (7) est généralement fendu sur une longueur égale de préférence à la longueur totale du tube (7) diminuée de celles du matelas gazeux (13) (fente par exemple triangulaire) autostabilisant ainsi l'épaisseur du matelas gazeux.

Ainsi l'invention concerne un procédé de soutirage progressif de particules catalytiques au cours d'un traitement catalytique d'une charge fluide (10) (voir figure 1 ou 1A) dans une zone de réaction (1) sensiblement verticale, allongée et cylindrique, renfermant un lit de catalyseur (3), le dit traitement catalytique consistant (selon la technique du brevet européen EP-A-99 800):

(a) à faire circuler progressivement le catalyseur de haut en bas dans la zone de réaction et à contrecourant de la dite charge, en maintenant le dit catalyseur dans la zone de réaction au moyen d'une zone de soutien (6) dont la forme épouse sensiblement une section de la zone de réaction, la dite zone de soutien étant disposée dans la partie inférieure de la zone de réaction,

(b) puis à fluidiser périodiquement au moins ou en continu la partie inférieure du lit catalytique et à évacuer progressivement le catalyseur de la zone de réaction au moyen d'au moins une conduite de soutirage (8) disposée dans la partie inférieure de la zone de réaction, et

(c) à faire circuler de bas en haut la charge fluide constituée d'un liquide et d'un gaz, en introduisant d'abord la majeure partie de la charge dans la partie inférieure de la zone de réaction, en faisant pénétrer d'une part dans le lit catalytique la majeure partie de la phase gazeuse de la charge à travers une pluralité d'espaces (9) aménagés dans la dite zone de soutien et en faisant pénétrer d'autre part dans le lit catalytique la majeure partie de la phase liquide de la charge à travers une pluralité de conduites (7) sensiblement verticales, la phase liquide et la phase gazeuse pouvant être introduites ensemble ou séparément par une ou plusieurs conduites d'injection, l'extrémité inférieure de chaque conduite plongeant dans le fond de la zone de réaction dans la dite charge et l'extrémité supérieure de chaque conduite débouchant au dessus de la dite zone de soutien, le procédé de soutirage de particules catalytiques étant caractérisé:

– en ce que, pour favoriser le soutirage des particules catalytiques hors de la zone de réaction, on fait cheminer une partie au moins de ces particules dans au moins une zone évasée et renversée de forme conique ou pyramidale dont l'axe vertical est sensiblement confondu avec l'axe d'une conduite sensiblement verticale de soutirage, la dite zone évasée étant discontinue et matérialisée par une pluralité de zones longues et étroites en forme chacune de languette sensiblement triangulaire ou trapézoïdale, éventuellement amincies vers leur extrémité inférieure, l'axe des languettes d'une même zone évasée convergeant sensiblement vers l'axe sensiblement vertical d'une même conduite de soutirage (8), de façon à provoquer à l'intérieur de la zone ou de(s) zone(s) évasée(s) le cheminement des particules catalytiques vers au moins une des dites conduites de soutirage, l'angle ($\alpha$) que fait l'axe d'une dite conduite de soutirage avec une génératrice du tronc de cône (si la forme évasée est tronconique) ou avec une arête de la pyramide (si la forme évasée est pyramidale) étant compris entre environ 30 et 70 degrés (et de préférence entre 40 et 50 degrés)

– en ce que, d'une part pour diriger l'ensemble des particules catalytiques vers une conduite de soutirage et d'autre part pour faire cheminer vers une conduite de soutirage les particules catalytiques qui sont passées sous les dites formes évasées, entre les dites languettes, et supprimer ainsi les amas de particules qui pourraient se former entre la dite zone de soutien (6) et les dites languettes, les particules catalytiques, dans la partie inférieure de la zone de réaction et au dessus de la zone de soutien, sont fluidisées en provoquant l'injection à travers la dite zone de soutien du lit catalytique, du liquide et du gaz constituant la dite charge, la perte de charge pour les gaz, de part et d'autre de la zone de soutien, étant comprise entre 0,1 et 1,5 kgf/cm$^2$ (9.806 et 147.100 Pa), chacune des dites conduites d'introduction de la phase liquide étant sensiblement discontinue sur au moins la partie de la dite conduite qui plonge dans le liquide au fond de la zone de réaction.

L'appareil selon l'invention (voir figure 1 ou 1A) comporte:

– un réacteur (1) sensiblement vertical et de forme sensiblement allongée et cylindrique,

– des moyens de soutirage des particules solides dans la partie inférieure du réacteur, constitués essentiellement d'au moins une tubulure (8) sensiblement verticale,

– un plateau (6) qui soutient les dites particules solides disposé dans la partie inférieure du réacteur et perforé de façon à permettre le passage de tubulures telles que (8),

– des moyens d'introduction d'une charge fluide constituée d'un liquide et d'un gaz dans l'extrémité inférieure du réacteur, sous le dit plateau (6), la phase liquide et la phase gazeuse étant ainsi introduites dans le réacteur par des conduites distinctes ou non,

– des dispositifs d'injection d'un gaz à travers le dit plateau et des dispositifs d'injection d'un liquide à travers le dit plateau, ces dispositifs comprenant essentiellement d'une part une pluralité d'orifices (9) pratiqués dans le dit plateau (6) destinés à l'introduction essentiellement du gaz et d'autre part des jambes (7) d'introduction essentiellement de la charge liquide, ces jambes sensiblement verticales traversant le dit plateau de façon à ce que l'extrémité supérieure d'une jambe est au dessus du plateau et l'extrémité inférieure d'une jambe dans la partie inférieure du réacteur;

l'appareil étant caractérisé en ce que:

– au dessus du dit plateau de soutien, autour de la conduite de soutirage des particules solides ou des conduites de soutirage s'il y en a plusieurs, sont disposées des languettes allongées, de préférence dures et résistantes à l'abrasion, de forme chacune sensiblement triangulaire, trapézoïdale et dont la largeur peut diminuer, c'est à dire peut s'amincir (par exemple progressivement) à leur extrémité inférieure (12), au voisinage du dit plateau, les dites languettes formant ensemble, autour d'une même conduite de soutirage, une zone discontinue, évasée et renversée (c'est à dire dont le sommet pointe vers la partie inférieure du réacteur) de forme tronconique ou pyramidale, la dite extrémité inférieure de chaque languette étant en contact avec, ou reposant sur le dit plateau, l'angle ($\alpha$) que forme l'axe de conduite de soutirage avec une génératrice de la zone évasée si celle-ci est de forme tronconique ou avec une arête si celle-ci est de forme pyramidale étant comprise entre 30 et 70 degrés et de préférence 40 et 50 degrés

– les dites jambes (7) sont munies d'une fente étroite et sensiblement triangulaire, le long de leur partie inférieure.

De préférence chaque languette repose sur la tranche d'une ailette ou plaque (4) (voir figure 1 ou 1A) sensiblement verticale en forme d'équerre (éventuellement en forme d'un trapèze rectangle) sensiblement rectangle dont l'hypothénuse est la dite tranche sur laquelle repose la dite languette. Ces ailettes, sont sensiblement disposées radialement par rapport à la conduite de soutirage qu'elles desservent.

Les dites ailettes peuvent être matériellement réalisées en un matériau soit plein soit au moins partiellement ajouré; ensemble elles délimitent ainsi au dessus du plateau de soutien, une pluralité de compartiments. Les figures 8, 8A, 9 et 9A représentent une ailette triangulaire dont la tranche s'amincit à son extrémité inférieure. L'ailette de la figure 9 ou 9A est ajourée.

Si l'appareil comporte une pluralité de tubulures (8) (voir figure 2), vers chacune desquelles s'oriente un réseau de languettes inclinées, celles-ci peuvent être disposées sur la tranche d'ailettes, comme expliqué plus haut; et les ailettes qui ne sont pas disposées à la périphérie du réacteur peuvent avoir la forme de plusieurs équerres ou triangles rectangles, pleins ou ajourés, accolés au moins partiellement les uns aux autres, les ailettes ainsi définies ( (4a) ou (4b) ) supportant des languettes appartenant alors à des réseaux différents.

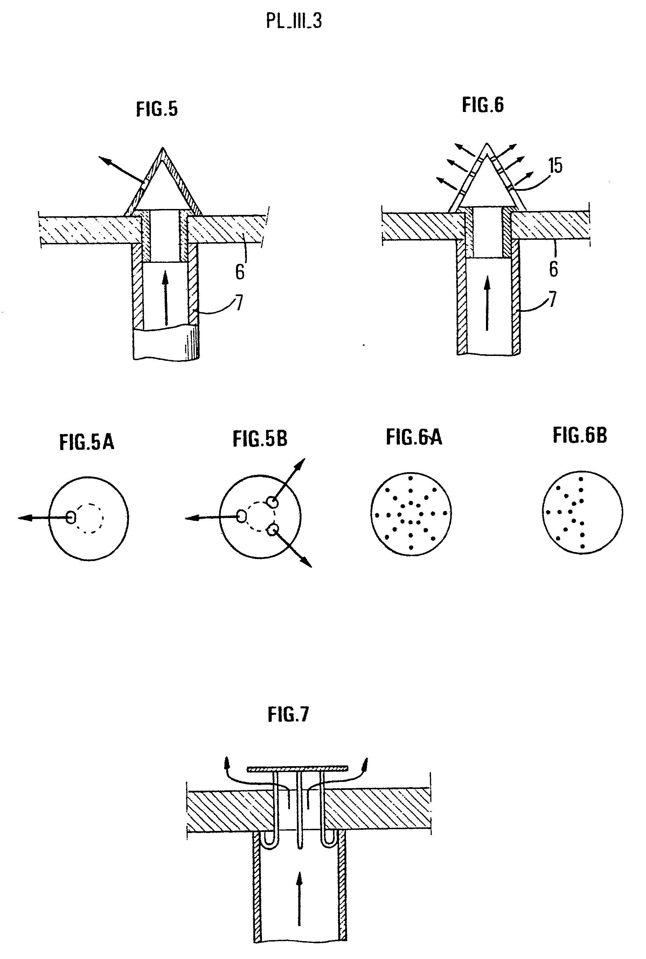

De préférence, une jambe (7) d'injection du liquide (voir figures 3, 3A, 4, 4A et 4B) est terminée à sa partie supérieure par au moins une buse 14, la dite ou les dites buse(s), située(s) au dessus du plateau de sortie (6), étant orientée(s) sensiblement parallèlement au dit plateau. Selon une autre réalisation préférée (voir figures 5, 5A, 5B, 6, 6A et 6B), l'extrémité supérieure de la jambe (7), au dessus du plateau (6), peut-être recouverte d'une zone (15) de protection en forme de toit traingulaire ou pyramidal ou similaire, des orifices d'injection de liquide étant aménagés dans ce toit de façon à ce que le liquide injecté par ces orifices suive un trajet sensiblement perpendiculaire au toit.

## Revendications

1. Procédé de soutirage progressif de catalyseur au cours d'un traitement catalytique d'une charge fluide (10) dans une zone de réaction (1) sensiblement verticale, allongée et cylindrique, renfermant un lit de catalyseur (3), le dit traitement catalytique consistant:

(a) à faire circuler progressivement le catalyseur de haut en bas dans la zone de réaction et à contrecourant de la dite charge, en maintenant le dit catalyseur dans la zone de réaction au moyen d'une zone de soutien (6) dont la forme épouse sensiblement une section de la zone de réaction, la dite zone de soutien étant disposée dans la partie inférieure de la zone de réaction

b) puis à fluidiser périodiquement ou en continu, la partie inférieure du lit catalytique et à évacuer progressivement le catalyseur de la zone de réaction au moyen d'au moins une conduite de soutirage (8) disposée dans la partie inférieure de la zone de réaction, et

(c) à faire circuler de bas en haut la charge fluide constituée d'un liquide et d'un gaz, en introduisant d'abord la majeure partie de la charge dans la partie inférieure de la zone de réaction en faisant pénétrer d'une part dans le lit catalytique la majeure partie de la phase gazeuse de la charge à travers une pluralité d'espaces (9) aménagés dans la dite zone de soutien et en faisant pénétrer d'autre part dans le lit catalytique la majeure partie de la phase liquide de la charge à travers une pluralité de conduites (7) sensiblement verticales, l'extrémité inférieure de chaque conduite plongeant dans le fond de la zone de réaction dans la dite charge et l'extrémité supérieure de chaque conduite débouchant au dessus de la dite zone de soutien, le procédé de soutirage de particules catalytiques étant caractérisé:

— en ce que, pour favoriser le soutirage des particules catalytiques hors de la zone de réaction, on fait cheminer une partie au moins de ces particules dans au moins une zone évasée et renversée de forme conique ou pyramidale dont l'axe vertical est sensiblement confondu avec l'axe d'une conduite sensiblement verticale de soutirage, la dite zone évasée étant discontinue et matérialisée par une pluralité de zones longues et étroites en forme chacune de languette sensiblement triangulaire ou trapézoïdale, l'axe des languettes d'une même zone évasée convergeant sensiblement vers l'axe sensiblement vertical d'une même conduite de soutirage (8), de façon à provoquer à l'intérieur de la zone ou de zones évasée(s) le cheminement des particules catalytiques vers au moins une des dites conduites de soutirage, l'angle ($\alpha$) que fait l'axe d'une dite conduite de soutirage avec une génératrice du tronc de cône (si la forme évasée est tronconique) ou avec une arête de la pyramide (si la forme évasée est pyramidale) étant compris entre 30 et 70 degrés.

— en ce que, d'une part pour diriger l'ensemble des particules catalytiques vers une conduite de soutirage et d'autre part pour faire cheminer vers une conduite de soutirage les particules catalytiques qui sont passées sous les dites zones évasées, entre les dites languettes, et supprimer ainsi les amas de particules qui pourraient se former entre la dite zone de soutien (6) et les dites languettes, les particules catalytiques, dans la partie inférieure de la zone de réaction et au dessus de la zone de soutien du lit catalytique sont fluidisées en provoquant l'injection à travers la dite zone de soutien du lit catalytique, du liquide et de gaz constituant la dite charge, la perte de charge pour les gaz, de part et d'autre de la zone de soutien, étant comprise entre 0,1 et 1,5 kgf/cm$^2$ (9.806 à 147.100 Pa), chacune des dites conduites d'introduction de la phase liquide étant sensiblement discontinue sur au moins la partie de la dite conduite qui plonge dans le liquide au fond de la zone de réaction.

2. Procédé selon la revendication 1 dans lequel la perte de charge pour les gaz, de part et d'autre de la zone de soutien est d'environ 0,2 kgf/cm$^2$ (19.614 Pa).

3. Appareil comportant

— un réacteur (1) sensiblement vertical et de forme sensiblement allongée et cylindrique

— des moyens d'introduction de particules solides dans la partie supérieure du réacteur

— des moyens de soutirage des particules solides dans la partie inférieure du réacteur, constituées essentiellement d'au moins une tubulure (8) sensiblement verticale,

- un plateau (6) qui soutient les dites particules solides et disposé dans la partie inférieure du réacteur et perforé de façon à permettre le passage de tubulures telles que (8)

- des moyens d'introduction d'une charge fluide constituée d'un liquide et d'un gaz dans l'extrémité inférieure du réacteur, sous le dit plateau (6)

- des dispositifs d'injection d'un gaz à travers le dit plateau et des dispositifs d'injection d'un liquide à travers le dit plateau, ces dispositifs comprenant essentiellement d'une part une pluralité d'orifices(9) pratiqués dans le dit plateau (6) destinés à l'introduction essentiellement de gaz et d'autre part des jambes (7) d'introduction essentiellement de la charge liquide, ces jambes sensiblement verticales traversant le dit plateau de façon à ce que l'extrémité supérieure d'une jambe est au dessus du plateau et l'extrémité inférieure d'une jambe dans la partie inférieure du réacteur, l'appareil étant caractérisé en ce que:

- au dessus du dit plateau de soutien, autour de la conduite de soutirage des particules solides ou des conduites de soutirage, s'il y en a plusieurs, sont disposées des languettes allongées, chacune de forme sensiblement triangulaire ou trapézoïdale

et dont la longueur s'amincit à leur extrémité inférieure (12), au voisinage du dit plateau, les dites languettes formant ensemble, autour d'une même conduite de soutirage, une zone discontinue, évasée et renversée (c'est à dire dont le sommet pointe vers la partie inférieure du réacteur) de forme tronconique ou pyramidale, la dite extrémité inférieure de chaque languette étant en contact avec, ou reposant sur le dit plateau, l'angle (α) que forme l'axe de conduite de soutirage avec une génératrice de la zone évasée si celle-ci est de forme tronconique ou avec une arête de la zone évasée si celle-ci est de forme pyramidale, étant compris entre 30 et 70 degrés et de préférence entre 40 et 50 degrés.

- les dites jambes (7) sont munies d'une fente étroite et sensiblement triangulaire le long de leur partie inférieure.

4. Appareil selon la revendication 5 dans lequel chaque languette repose sur la tranche d'une ailette ou plaque (4) sensiblement verticale en forme d'équerre sensiblement rectangle (éventuellement en forme de trapèze rectangle) dont l'hypothénuse est la dite tranche sur laquelle repose la dite languette.

5. Appareil selon la revendication 4 dans lequel les dites ailettes sont réalisées en un matériau soit plein soit au moins partiellement ajouré et délimitent ensemble au dessus du plateau de soutien, une pluralité de compartiments.

6. Appareil selon l'une des revendications 3 à 5, comportant une pluralité de tubulures 8 vers chacune desquelles s'oriente un réseau de languettes inclinées, celles-ci étant disposées à la périphérie du réacteur pouvant avoir la forme de plusieurs équerres ou triangles rectangles, plans ajourés, accolés au moins partiellement les uns aux autres, les ailettes ainsi définies ( (4a) ou 4b) ) supportant les languettes appartenant à des réseaux différents.

7. Appareil selon l'une des revendications 3 à 6 dans lequel la jambe (7) d'injection du liquide est terminée à sa partie supérieure par au moins une buse 14, la dite ou les dites buse(s), située(s) au dessus du plateau de soutien 6, étant orientée(s) sensiblement parallèlement au dit plateau.

8. Appareil selon l'une des revendication 3 à 6 dans lequel l'extrémité supérieure de la jambe (7), au-dessus du plateau (6), est recouverte d'une zone (15) de protection en forme de toit triangulaire ou pyramidal ou similaire, des orifices d'injection de liquide étant aménagés dans le dit toit de façon à ce que le liquide injecté par ces orifices suive un trajet sensiblement perpendiculaire au dit toit.

9. Utilisation du procédé selon l'une des revendications 1 et 2 ou de l'appareil selon l'une des revendications 4 à 9 pour l'hydrotraitement catalytique de coupes pétrolières lourdes ou des bruts lourds ou pour les réactions d'hydrodémétallisation, d'hydrodésulfuration, de craquage, d'hydrocraquage, d'isomérisation des hydrocarbures paraffiniques, naphténiques, ou aromatiques, les réactions diverses d'hydrogénation, d'hydrotraitement, de déshydrogénation, d'alkylation, de transalkylation, d'hydrodécyclisation, d'hydrodéalkylation et les traitements d'hydroviscoréduction.

**Patentansprüche**

1. Verfahren zum progressiven Abziehen von Katalysator während einer katalytischen Behandlung einer Fluidcharge (10) in einer im wesentlichen vertikalen länglichen und zylindrischen Reaktionszone (1), die ein Katalysatorbett (3) enthält, wobei die katalytische Behandlung umfasst:

(a) progressives Zirkulierenlassen des Katalysators von oben nach unten in der Reaktionszone und im Gegenstrom zu dieser Charge, indem der Katalysator in der Reaktionszone mittels einer Stützzone (6) gehalten wird, deren Form im wesentlichen einen Querschnitt der Reaktionszone annimmt, wobei die Stützzone im unteren Teil der Reaktionszone angeordnet ist;

(b) periodisches oder kontinuierliches Fluidisieren des unteren Teils des katalytischen Bettes und allmähliches Abziehen des Katalysators aus der Reaktionszone vermittels wenigstens einer Abzugsleitung (8), die im unteren Teil der Reaktionszone angeordnet ist und

(c) Zirkulierenlassen von unten nach oben der Fluidcharge, die aus einer Flüssigkeit und einem Gas gebildet ist, indem man zunächst den grösseren Teil der Fluidcharge in den unteren Teil der Reaktionszone einführt und einerseits in das katalytische Bett den grösseren Teil der gasförmigen Phase der Charge durch eine Vielzahl von Räumen (9) eindringen lässt, die in dieser Stützzone angeordnet sind und indem man andererseits in das katalytische Bett den grösseren Teil der flüssigen Phase der Charge über eine Vielzahl von im wesentlichen vertikalen Leitungen (7) eindringen lässt, wobei das untere Ende jeder Leitung in den Boden der Reaktionszone in dieser Charge taucht und das obere Ende jeder Leitung oberhalb dieser Stützzone mündet, wobei das Verfahren zum Abziehen der katalytischen Partikel sich dadurch auszeichnet,

– dass zur Begünstigung des Abziehens der katalytischen Partikel aus der Reaktionszone man wenigstens einen Teil dieser Partikel in wenigstens eine aufgeweitete und umgekehrt kegelstumpfförmige oder umgekehrt pyramidenförmige Zone wandern lässt, deren vertikale Achse im wesentlichen mit der Achse einer im wesentlichen vertikalen Abzugsleitung zusammenfällt, wobei diese aufgeweitete oder erweiterte Zone diskontinuierlich und in Form einer Vielzahl langer und schmaler Zonen materialisiert ist, die jeweils in Form einer im wesentlichen dreieckigen oder trapezförmigen Zunge vorliegen, wobei die Achse der Zungen ein und der gleichen aufgeweiteten Zone im wesentlichen gegen die im wesentlichen vertikale Achse ein und der gleichen Abzugsleitung (8) konvergiert, derart, dass im Inneren der aufgeweiteten Zone(n) die Wanderung oder Führung der katalytischen Partikel gegen wenigstens eine dieser Abzugsleitungen hervorgerufen wird, wobei der Winkel (α), den die Achse einer sog. Abzugsleitung mit einer Erzeugenden des Kegelstumpfes bildet (wenn die aufgeweitete Form kegelstumpfförmig ist) oder mit einer Kante der Pyramide (wenn die aufgeweitete Form Pyramidengestalt hat) bildet, zwischen 30 und 70° beträgt,

– und dass einerseits zum Führen der Gesamtheit der katalytischen Partikel gegen eine Abzugsleitung und andererseits, um die katalytischen Partikel, die unter diesen aufgeweiteten Zonen durchgegangen sind, gegen eine Abzugsleitung zwischen diesen Zungen wandern zu lassen und so die Anhäufungen von Partikeln zu vermeiden, die sich zwischen der Stützzone (6) und diesen Zungen bilden können, die katalytischen Partikel im unteren Teil der Reaktionszone und oberhalb der Stützzone des katalytischen Bettes fluidisiert werden, indem (quer) über diese Stützzone des katalytischen Bettes diese Charge bildende Flüssigkeit und bildendes Gas eingeführt oder eingeblasen werden, wobei der Druckverlust für die Gase zu beiden Seiten der Stützzone zwischen 0,1 und 1,5 kp/cm$^2$ (9.806 bis 147.100 Pa) beträgt, wobei jede der Einführungsleitungen für die flüssige Phase im wesentlichen über den Teil der Leitung diskontinuierlich ausgebildet ist, der in die Flüssigkeit am Boden der Reaktionszone taucht.

2. Verfahren nach Anspruch 1, dadurch gekennzeichnet, dass der Druckverlust für die Gase zu beiden Seiten der Stützzone bei etwa 0,2 kp/cm$^2$ (19.614 Pa) liegt.

3. Vorrichtung mit
– einem im wesentlichen vertikalen Reaktor (1) von im wesentlichen länglicher und zylindrischer Gestalt

– Einrichtungen zum Einführen von Feststoffpartikeln in den oberen Teil des Reaktors
– Einrichtungen zum Abziehen der Feststoffpartikel in den unteren Teil des Reaktors, die im wesentlichen aus wenigstens einem im wesentlichen vertikalen Rohrstutzen (8) bestehen,
– einem Boden (6), der die Feststoffpartikel abstützt und im unteren Teil des Reaktors angeordnet und derart perforiert ist, dass der Durchgang der Rohrstutzen wie (8) ermöglicht wird
– Einrichtungen zum Einführen einer Fluidcharge, die gebildet ist aus einer Flüssigkeit und einem Gas, in das untere Ende des Reaktors unter diesen Boden (6)
– Einrichtungen zum Einführen oder Einblasen eines Gases durch diesen Boden, wobei die Vorrichtungen im wesentlichen einerseits eine Vielzahl von Öffnungen (9) umfassen, die in dem Boden (6) ausgespart und dazu bestimmt sind, im wesentlichen Gas einzuführen und andererseits «Beine» oder Schenkel (7) im wesentlichen zum Einführen der flüssigen Charge umfassen, wobei diese im wesentlichen vertikalen «Beine» diesen Boden derart durchsetzen, dass das obere Ende eines Beins oder Schenkels sich oberhalb des Bodens und das untere Ende eines Beins oder Schenkels sich im unteren Teil des Reaktors befindet, wobei die Vorrichtung sich dadurch auszeichnet, dass:
– oberhalb des Stützbodens um die Abzugsleitung für die festen Partikel oder die Abzugsleitungen herum, wenn mehrere vorhanden sind, längliche Zungen angeordnet sind, die jede im wesentlichen dreieckige oder trapezförmige Gestalt haben

und die sich in der Länge an ihrem unteren Ende (12) benachbart diesem Boden verjüngen, wobei diese Zungen zusammen um ein und die gleiche Abzugsleitung eine diskontinuierliche Zone, die aufgeweitet und umgekehrt ist, kegelstumpfförmige oder pyramidenförmige Gestalt bilden (d.h. deren Spitze gegen den unteren Teil des Reaktors weist), wobei der untere Teil jeder Zunge in Kontakt mit diesem Boden steht oder auf diesem ruht und der Winkel (α), den die Achse der Abzugsleitung mit einer Erzeugenden der aufgeweiteten Zone, wenn diese von kegelstumpfförmiger Gestalt ist, oder mit einer Kante der aufgeweiteten Zone, wenn diese von pyramidenförmiger Gestalt ist, bildet, zwischen 30° und 70° und vorzugsweise zwischen 40° und 50° beträgt;
– und dass diese «Beine» oder Schenkel (7) mit einem engen im wesentlichen dreieckigen Fenster längs ihres unteren Teils versehen sind.

4. Vorrichtung nach Anspruch 3, dadurch gekennzeichnet, dass jede Zunge auf dem im wesentlichen vertikalen Abschnitt einer Rippe oder Platte (4) von der Gestalt eines im wesentlichen rechtwinkligen Winkelstücks (gegebenenfalls in Form eines rechtwinkligen Trapezes) ruht, dessen Hypothenuse dieser Abschnitt ist, auf welchem die Zunge ruht.

5. Vorrichtung nach Anspruch 4, dadurch gekennzeichnet, dass diese Rippen aus einem entweder vollwandigen oder wenigstens teilweise durchbrochenen Material bestehen und zusammen oberhalb des Stützbodens eine Vielzahl von Kammern begrenzen.

6. Vorrichtung nach einem der Ansprüche 3 bis 5, mit einer Vielzahl von Rohrstutzen (8) gegen deren jeden sich ein Netz geneigter Zungen orientiert, wobei diese auf der Schmalseite bzw. dem Abschnitt von Rippen angeordnet sind, wobei diejenigen der Rippen, die nicht am Umfang des Reaktors angeordnet sind, die Form mehrerer Winkel oder rechtwinkliger Dreiecke, durchbrochene Ebenen, haben können, die wenigstens teilsweise aneinander angebaut sind, wobei die so definierten Rippen ( (4a oder 4b) ) zu unterschiedlichen Netzen gehörende Zungen abstützen.

7. Vorrichtung nach einem der Ansprüche 3 bis 6, bei dem das «Bein» (7) bzw. der diesbezügliche Schenkel (7) zum Einspritzen von Flüssigkeit an seinem oberen Teil in wenigstens einer Düse (14) endet, wobei diese sich oberhalb des Stützbodens (6) befindende Düse(n) im wesentlichen parallel zu diesem Boden orientiert ist bzw. sind.

8. Vorrichtung nach einem der Ansprüche 3 bis 6, bei dem das obere Ende des «Beins» bzw. Schenkels (7) oberhalb des Bodens (6) von einer Schutzzone in Form eines dreieckigen oder pyramidenförmigen oder ähnlichen Daches überdeckt ist und Flüssigkeitseinspritzöffnungen in diesem Dach derart vorgesehen sind, dass die über diese Öffnungen eingespritzte Flüssigkeit einem Weg im wesentlichen senkrecht zu diesem Dach folgt.

9. Anwendung des Verfahrens nach einem der Ansprüche 1 und 2 oder der Vorrichtung nach einem der Ansprüche 3 bis 8 auf die katalytische Hydrierbehandlung (Hydrotreatment) von schweren Erdölfraktionen oder von schweren Rohölen oder für die Reaktionen der Hydrodemetallisierung, Hydrodesulphurierung, des Cracken, des Hydrocracken, der Isomerierung der paraffinischen, naphtenischen oder aromatischen Kohlenwasserstoffe, den unterschiedlichen Reaktionen der Hydrierung, des Hydrotreatment, der Dehydrierung, der Alkylierung, der Transalkylierung, der Hydrodezyklisierung, der Hydrodealkylierung und der Behandlungen der Hydroviskoreduktion.

**Claims**

1. A process for progressively withdrawing catalyst from a catalyst bed (3) contained in a substantially vertical, elongate and cylindrical reaction zone (1) during the catalytic treatment therein of a fluid charge (10) (see figure 1 or 1A), said catalytic treatment consisting of:

(a) progressively circulating the catalyst downwardly through the reaction zone, counter-currently with said charge, while maintaining said catalyst in the reaction zone by support means (6) of a shape adapter to correspond substantially to a section of the reaction zone, said supporting means being provided at the lower part of the reaction zone,

(b) periodically or continuously fluidizing the lower part of the catalyst bed and progressively discharging the catalyst from the reaction zone through at least one withdrawing duct (8) extending from the lower part of the reaction zone, and

(c) upwardly circulating the fluid charge formed of a liquid and a gas, by first introducing the major part of the charge in the lower part of the reaction zone, by injecting the major part of the gaseous phase of the charge into the catalyst bed through a plurality of holes (9) provided in said support means and by introducing a major part of the liquid phase of the charge into the catalyst bed through a plurality of substantially vertical pipes (7), the lower end of each pipe dipping from the bottom of the reaction zone into said charge and the upper end of each pipe opening above said support means, the process for withdrawing the catalyst particles being characterized in that:

– in order to favour the withdrawal of the catalyst particles from the reaction zone, at least a portion of said particles is moved through at least one flared zone shaped as a cone or a pyramid turned upside down, whose vertical axis substantially coincides with the axis of a substantially vertical withdrawing duct, said flared zone being discontinuous and formed of a plurality of elongate and narrow members each shaped as a substantially triangular or trapezoidal strip, the axes of the strips of a given flared zone substantially converging towards the substantially vertical axis of a given withdrawing duct (8), so as to induce, inside the one or more flared zones, the motion of the catalyst particles towards at least on of said withdrawing ducts, the angle (α) of the axis of one of said withdrawing ducts with a generatrix of the cone frustrum (when the flared zone is frustro-conical) or with one edge of the pyramid (when the flared zone is pyramidal) being about from 30 to 70 degrees,

– in order to orient the assembly of catalyst particles towards a withdrawing duct and to move towards a withdrawing duct the catalyst particles which have passed below said flared zone, between said strips, and thus to prevent accumulations of particles which might be formed between said support means (6) and said strips, the catalyst particles in the lower part of the reaction zone and above the support means are fluidized by injecting through said catalyst bed support means the liquid and gaseous charge, the pressure drop for the gases through the support means ranging from 0.1 to 1.5 kgf/cm$^2$ (9806 to 147 100 Pa), each of said ducts for introducing the liquid phase being substantially discontinuous over at least a portion of said duct dipping into the liquid at the bottom of the reactor.

2. A process according to claim 1, wherein the gas pressure drop through the support means is about 0,2 kgf/cm$^2$ (19.614 Pa).

3. An apparatus comprising
– a substantially vertical reactor (1) substantially of elongate and cylindrical shape,
– means for introducing solid particles in the upper part of the reactor,
– means for withdrawing solid particles from the lower part of the reactor, essentially consisting of at least one substantially vertical duct (8)

- a plate (6) supporting said solid particles, at the lower part of the reaction zone, so perforated as to give passage to ducts such as (8),

- means for introducing a fluid charge consisting of a liquid and a gas through the lower end of the reactor, below said plate (6),

- devices for injecting a gas through said plate and liquid injection devices passing through said plate, said devices essentially comprising, on the one hand, a plurality of holes (9) provided in said plate (6) essentially for introducing gas and, on the other hand, feeding pipes (7) essentially for introducing the liquid charge, these essentially vertical feeding pipes passing through said plate, so that the upper end of a pipe is above the plate and the lower end of a pipe in the lower part of the reactor.

The apparatus is characterized in that:

- above said supporting plate, around the one or more ducts for withdrawing solid particles, are arranged elongate strips, having each substantially a triangular, trapezoidal of equivalent shape, and whose width may be decreased (for example progressively) at their lower end (12), near said plate, said strips forming together, around a given withdrawing duct, a discontinuous flared zone of frustro-conical or pyramidal shape, but oriented upside down, i.e. with the apex oriented towards the reactor bottom, the lower end of each strip being in contact with, or being laid on said plate, the angle ($\alpha$) of the axis of the withdrawing duct with a generatrix of the flared zone when the latter is frustro-conical or with an edge thereof when the latter is of pyramidal shape, ranging from 30 to 70 degrees, preferably from 40 to 50 degrees.

- said feeding pipes (7) are provided with a substantially triangular narrow slot, along their lower part.

4. An apparatus according to claim 3, wherein each strip is supported by the edge of a substantially vertical fin or plate (4), shaped substantially as a right-angled corner plate (eventually as a right-angled trapezium) whose hypothenuse consists of said edge supporting said strip.

5. An apparatus according to claim 4, wherein said fins are made of a solid or at least partially recessed material and define together a plurality of compartments above the support plate.

6. An apparatus according to any of claims 3 to 5 comprising a plurality of ducts (8) toward each of which is oriented a system of inclined strips, said strips being placed on the thin edge of the fins, and the fins which are not located at the periphery of the reactor having optionally the shape of several corner plates or right-angled triangles, solid or recessed, at least partially joined to each other, the so-defined fins (4a) or (4b) carrying strips which then pertain to different gathering systems.

7. An apparatus according to any of claims 3 to 6, wherein each liquid feeding pipe (7) is provided at its upper end with at least one nozzle (14) located above the support plate (6) and oriented in a direction substantially parallel to said plate.

8. An apparatus according to any of claims 3 to 6, wherein the upper end of the feeding pipe (7), above plate (6), is covered with a protective roof-like member of triangular, pyramidal or similar shape, liquid injection orifices being provided in said roof-member so that the liquid injected through said orifices be oriented substantially perpendicularly to the roof-member.

9. The use of the process according to any of claims 1 or 2 or of the apparatus according to one of claims 3 to 8 for the catalytic hydrotreatment of heavy oil cuts or heavy crude oils or for reactions of hydrodemetallation, hydrodesulfurization, cracking, hydrocracking, hydroreforming, manufacture of aromatic hydrocarbons, isomerisation of paraffinic, naphthenic or aromatic hydrocarbons, various reactions of hydrogenation, hydrotreatment, dehydrogenation, alkylation, transalkylation, hydrodecyclisazion, hydrodealkylation, hydrovisbreaking treatments.

PL_I_3

**FIG.1A**

**FIG.1**

**FIG.8**

**FIG.8A**

**FIG.9**

**FIG.9A**

PL_II_3

**FIG.2**

**FIG.3**

**FIG.4**

**FIG.3A**

**FIG.4A**

**FIG.4B**

PL_III_3

FIG.5

FIG.6

FIG.5A          FIG.5B          FIG.6A          FIG.6B

FIG.7